(19) **Europäisches Patentamt**
**European Patent Office**
**Office européen des brevets**

(11) **EP 2 926 085 B1**

(12) **FASCICULE DE BREVET EUROPEEN**

(45) Date de publication et mention de la délivrance du brevet:
**21.11.2018 Bulletin 2018/47**

(21) Numéro de dépôt: **13801525.0**

(22) Date de dépôt: **02.12.2013**

(51) Int Cl.:
*G01C 5/04* *(2006.01)*    *G01C 9/22* *(2006.01)*

(86) Numéro de dépôt international:
**PCT/EP2013/075284**

(87) Numéro de publication internationale:
**WO 2014/083207 (05.06.2014 Gazette 2014/23)**

(54) **INCLINOMÈTRE LONGUE BASE À MESURE OPTIQUE**

NEIGUNGSMESSER MIT LANGER AUFNAHME FÜR OPTISCHE MESSUNGEN

LONG BASE INCLINOMETER WITH OPTICAL MEASUREMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2012 FR 1261528**

(43) Date de publication de la demande:
**07.10.2015 Bulletin 2015/41**

(73) Titulaires:
• **Centre National de la Recherche Scientifique (C.N.R.S.)**
**75016 Paris (FR)**
• **UNIVERSITE DE MONTPELLIER**
**34090 Montpellier (FR)**

(72) Inventeur: **BOUDIN, Frédérick**
**F-34000 Montpellier (FR)**

(74) Mandataire: **Ipside**
**6, Impasse Michel Labrousse**
**31100 Toulouse (FR)**

(56) Documents cités:
**WO-A1-81/00150    WO-A1-2012/013698**
**FR-A- 1 056 230    US-A- 5 148 018**

• **J CHERY ET AL: "High resolution tiltmeters and seismometers based on Extrinsic Fiber Fabbry-Perot Interferometry (EFFPI) The LINES project -ANR funding 2009-2012", LSBB, 29 mai 2012 (2012-05-29), XP055094489,**

**Description**

**Domaine de l'invention**

La présente invention concerne un inclinomètre, c'est-à-dire un dispositif destiné à mesurer des variations d'inclinaison de structures. L'invention est notamment utilisable dans les forages horizontaux ou des galeries, dans le domaine du génie civil, pour la surveillance d'ouvrages d'art et de bâtiments, et globalement partout où un contrôle précis de la stabilité d'une structure est requis, particulièrement sur le long terme.

**Etat de la technique**

Les mesures de variation d'inclinaison de structures sont fréquentes et notamment réalisées dans le cas de mesure de déformations géophysiques, plus spécifiquement de déformations sismiques ou volcaniques. De telles mesures sont également effectuées pour prévenir un éventuel danger d'effondrement de bâtiments ou d'une partie de ceux-ci, ou encore pour suivre l'évolution du stockage de fluides dans des sites de stockage géologique et la migration de ces fluides dans la couche perméable. Ces mesures peuvent également être utilisées pour contrôler l'horizontalité de grandes structures industrielles.

Lors d'un séisme, dans les zones de failles, le mouvement des failles géologiques survient de façon rapide. La détection de ces mouvements est aisée. Entre deux séismes, les déformations existent mais sont très faibles et très lentes. Or ces déformations sont couplées avec l'activité sismique et la détection de ces déformations est indispensable pour comprendre le mécanisme des failles dans la croute terrestre. Il doit donc être fait appel à des instruments de mesure très stables et fiables sur le long terme, de plusieurs années jusqu'à plusieurs centaines d'années.

Il n'existe pas à l'heure actuelle de dispositifs commercialisés pouvant être installés en réseau et capables de réaliser une mesure stable à haute résolution sur le long terme. Les dispositifs actuels connus sont généralement des inclinomètres à bulle, des inclinomètres pendulaires. De tels dispositifs peuvent être installés en forage et en réseau mais ils s'avèrent instables sur le long terme. D'autres dispositifs connus sont les inclinomètres hydrostatiques associés à des systèmes de mesure capacitifs, magnétiques ou à courant induit de type capteur LVDT inductif (de l'anglais « Linear Variable Differential Transformer ») dit « transformateur différentiel ». Ces derniers, peuvent s'avérer stables sur le long terme mais présentent l'inconvénient de ne pas pouvoir être installés en forage et donc en réseau. De plus, l'ensemble des dispositifs utilisent des composants électroniques trop proches du capteur diminuant sensiblement la fiabilité long terme du dispositif. Tous ces dispositifs permettent de quantifier des déformations à partir de la mesure de variations d'inclinaison.

Un exemple d'inclinomètre basé sur le principe des vases communicants et utilisant des systèmes de mesure à fibre optique peut être trouvé dans le document "High resolution tiltmeters and seismometers based on Extrinsic Fiber Fabbry-Perot Interferometry (EFFPI)" de J. Cherry et Al., dans "The LINES Project".

**Exposé de l'invention**

La présente invention propose un dispositif nouveau permettant de mesurer précisément des variations d'inclinaison d'une structure.

Un objectif de la présente invention est de fournir un dispositif adapté à des mesures de variations d'inclinaison dans le temps répondant à des contraintes de taille, de performance et de coût rendant son utilisation réaliste en milieu industriel.

Ces objectifs, ainsi que d'autres qui apparaîtront par la suite, sont atteints selon l'invention grâce à un inclinomètre pour la mesure d'une variation d'inclinaison d'une structure depuis une position initiale donnée, comportant :

- deux pots, chaque pot comportant un même volume et une même hauteur d'un même liquide,
- un moyen de communication reliant lesdits deux pots et permettant au liquide de s'écouler entre les deux pots suivant le principe des vases communicants,
- deux dispositifs de mesure optique, un dispositif de mesure optique par pot.

Chaque dispositif de mesure optique mesurant une variation $\Delta z$ de hauteur de niveau de liquide dans le pot associé.

L'inclinomètre est basé sur la mesure d'une variation $\Delta z$ de hauteur de niveau de liquide dans les pots.

On entendra par « hauteur », ou « altitude » une direction verticale, c'est-à-dire sensiblement parallèle à la force de gravitation. De même, on entendra par « horizontalement », la direction sensiblement perpendiculaire à la force de gravitation.

Lorsque la structure se déforme, elle entraîne une variation d'inclinaison par rapport à la position initiale de la structure qui lui est rigidement solidaire. Le mouvement relatif entre la structure dans la position initiale et la variation de hauteur de niveau de liquide dans les pots permet avantageusement de mesurer la variation d'inclinaison de la structure.

La mesure du déplacement en hauteur du niveau de liquide, dans un pot, par rapport à la structure, est obtenue par une mesure optique de déplacement de cette hauteur acquise par un dispositif de mesure optique.

Les mesures optiques sont des mesures sans contact et présentent l'avantage d'éviter les problèmes de capillarité qu'il est possible d'observer avec des systèmes de mesure à courant induit de type capteur LVDT.

De plus, les mesures optiques permettent avantageusement une augmentation de la dynamique de mesure de l'inclinomètre, c'est-à-dire la variation maximale de hauteur du niveau de liquide dans un pot.

Cette dynamique de mesure, au moins de l'ordre du centimètre, permet de faciliter la mise en place de l'inclinomètre dans une installation quelconque, telle qu'un forage par exemple, et par conséquent de réduire le temps de cette installation.

L'inclinomètre est avantageusement destiné à la mesure de déformations géophysiques, des réservoirs de stockage géologique et pour des applications de génie civil (déformation d'ouvrage de génie civil) pour lesquelles un contrôle précis de la stabilité d'une structure est requis, particulièrement sur le long terme.

Suivant des modes de réalisation préférés, l'invention répond en outre aux caractéristiques suivantes, mises en oeuvre séparément ou en chacune de leurs combinaisons techniquement opérantes.

Dans des modes de réalisation préférés de l'invention, afin de minimiser la dérive du système de mesure, les dispositifs de mesure optique sont des dispositifs à fibres optiques couplés à une source lumineuse commune.

L'utilisation de fibres optiques permet avantageusement de déporter les composants optiques actifs, tels que les sources lumineuses, les moyens de détection, dans un espace protégé et non soumis à des contraintes de l'environnement extérieur, telles que les radiations, l'électromagnétisme, l'oxydation,.... La fiabilité long terme du système de mesure en est augmenté, ainsi que celle de l'inclinomètre.

Et la partie mécanique de l'inclinomètre, telle que les pots, le moyen de communication, et les composants optiques passifs, tels que les fibres optiques peuvent être installés dans un environnement contraignant, tel que par exemple un environnement radiatif, électromagnétique, oxydant ou thermique. L'encombrement des pots, du moyen de communication, et des composants optiques passifs est considérablement réduit, de l'ordre de quelques centimètres ; ce qui représente un avantage certain pour une utilisation dans un environnement industriel ou les volumes utilisables sont souvent fortement réduits, voir difficilement accessibles.

Les fibres optiques sont également insensibles aux influences électromagnétiques.

L'inclinomètre de l'invention se différentie complètement des inclinomètres existants, qu'ils soient optiques, électriques ou capacitifs. Pour tous les inclinomètres existants, on constate la présence, au niveau des pots, d'alimentations électriques, de composants optiques, électroniques, ..., tous fortement sensibles aux variations électromagnétiques, aux radiations ou aux oxydations. On peut citer par exemple les sources lumineuses (laser ou autre) associées à chaque pot, des composants électroniques associés à chaque source lumineuse pour assurer le fonctionnement de chacune desdites sources lumineuses, des caméras du type à transfert de charges (plus connu sous le nom de caméra CCD pour « Charge Coupled Device ») ou des photodiodes pour transformer un signal lumineux en un signal électrique, des miroirs de renvoi, positionnés au dessus des pots, pour réfléchir les faisceaux optiques vers les caméras ou photodiodes. Tous ces composants sont autant d'éléments encombrants et difficiles à maîtriser dans un environnement hostile (radiatif, oxydant et électromagnétique).

Le couplage des dispositifs de mesure optique à une unique source lumineuse commune permet avantageusement d'éliminer tous les bruits en mode commun. Le couplage des dispositifs de mesure optique à une unique source lumineuse commune permet avantageusement d'éliminer la dérive en longueur d'onde propre à chaque source lumineuse, ainsi que les bruits ou erreurs thermiques, atmosphérique, électromagnétique produit par l'environnement.

De plus, contrairement aux inclinomètres longue base existants nécessitant plusieurs sources lumineuses et des composants optiques et mécaniques au niveau de chaque pot, augmentant ainsi le coût global desdits inclinomètres, l'inclinomètre selon l'invention avec une unique source lumineuse déportée voit son cout de fabrication considérablement réduit.

Le contrôle de la dérive par une double mesure et grâce à l'utilisation d'une source lumineuse commune présente également un avantage économique. Cela permet d'utiliser une source lumineuse stable à un coût au moins 10 à 100 fois moins cher que les sources lumineuses ultra stables sur le long terme et ayant un vieillissement plus rapide.

De plus, l'utilisation de fibres optiques facilite l'entretien de l'inclinomètre, sur le long terme. Les composants actifs étant déportés dans une zone accessible, lorsque l'un de ces composants est en panne, le remplacement de ce composant en est facilité ; il n'est plus nécessaire de devoir accéder aux pots, surtout lorsque ceux-ci sont situés dans un environnement difficilement accessible. Sur les inclinomètres existants, le nombre de composants optiques, mécaniques et électroniques important au niveau du pot augmente le risque de panne et diminue d'autant la fiabilité long terme. Cela est à priori quasi inenvisageable dans un milieu hostile radiatif nécessitant des interventions très coûteuses. Et cela est impossible dans un forage sans sortir l'inclinomètre du forage. Il y a alors perte de la référence et la mesure long terme très fine est perdue.

L'utilisation d'un inclinomètre longue base (30 mètres et plus) présente également un avantage très important concernant la stabilité long terme de couplage. Plus l'inclinomètre est de grande dimension, plus le rapport signal sur bruit est important, même à très basse fréquence, pour observer des déformations pouvant durer plusieurs jours jusqu'à plusieurs années. Les études menées pour observer les déformations produites par des réservoirs géologiques, ou par un stockage radioactif, ou encore par des failles montrent qu'il est nécessaire d'atteindre des stabilités meilleures que $10^{-8}$ rad/mois, ce que l'inclinomètre de l'invention peut atteindre. (Voir les publications suivantes :

- Kostoglodov et al, 2002. "Long-baseline fluid tiltmeter for seismotectonic studies of Mexican subduction zone", Geofisica Int., 41(1), 11-25,
- Boudin et al, 2008, "A silica long base tiltmeter with high stability and resolution", Rev. Sci. Instrum., 79, 034502, doi:10.1063/1.2829989,
- D'Oreye, N. & Žurn, W., 2005. "Very high resolution long-baseline watertube tiltmeter to record small signais from Earth free oscillations up to secular tilts", Rev. Sci. Instrum., 76, 024501, doi:10.1063/1.1844451.)

Dans des modes de réalisation préférés de l'invention, les dispositifs à fibre optique sont des dispositifs à fibre optique extrinsèque, et chaque dispositif de mesure optique comporte :

- une source lumineuse, de longueur d'onde centrale $\lambda_0$, pour générer un faisceau lumineux en direction du pot associé,
- une surface réfléchissante positionnée à l'intérieur du pot,
- une fibre optique, dite fibre de mesure, pour transporter et guider le faisceau lumineux vers le pot associé, une extrémité de ladite fibre de mesure, fixée au niveau d'une extrémité haute du pot et placée en regard de la surface réfléchissante, formant avec ladite surface réfléchissante une cavité optique externe de Fabry-Pérot,
- un moyen de détection d'un signal interférométrique, ledit signal interférométrique comportant l'information sur le déplacement du niveau de liquide par rapport à l'extrémité de la fibre de mesure, et étant généré par une interférence entre un faisceau lumineux de référence et un faisceau de mesure, ledit faisceau lumineux de référence correspondant à une fraction du faisceau lumineux issu de la source lumineuse qui est réfléchie par l'extrémité de la fibre, et ledit faisceau lumineux de mesure correspondant à une fraction du faisceau lumineux issu de la source lumineuse qui est réfléchie par la surface réfléchissante et qui parcourt un trajet optique dans la cavité de Fabry-Pérot dont la variation est fonction de la variation de hauteur du niveau de liquide dans le pot à déterminer.

La source lumineuse étant commune aux deux dispositifs de mesure optiques, l'inclinomètre comporte un coupleur 1*2 voies, pour scinder le faisceau issu de la source lumineuse commune en deux faisceaux.

Le faisceau issu de la source lumineuse commune se propage, via une fibre, vers le coupleur puis vers une fibre de mesure et une cavité optique externe Fabry-Pérot.

Dans de tels dispositifs à fibre optique extrinsèque, la fibre optique utilisée n'est pas le transducteur et ne joue le rôle que de support pour la transmission d'un faisceau lumineux d'un point à un autre. La fibre optique est un élément passif, l'environnement extérieur, tel que l'humidité, la température,..., ne perturbe pas les mesures. Ce type de dispositif à fibre optique extrinsèque permet ainsi de déporter l'ensemble des composants optoélectroniques hors de la zone de mesure.

De tels dispositifs à fibre optique extrinsèque permettent de s'affranchir des perturbations externes sur la fibre de mesure.

L'utilisation de dispositifs à fibre optique extrinsèque à cavité de Fabry-Pérot facilite l'installation et l'entretien de l'inclinomètre, sur le long terme. Avec de tels dispositifs à fibre optique extrinsèque à cavité de Fabry-Pérot, il n'est plus nécessaire d'avoir de fibre de référence, ni d'optique de polarisation. Il n'existe plus non plus de problème d'alignement, il suffit de positionner l'extrémité de la fibre en direction du pot. Alors que pour les inclinomètres existants, il est nécessaire d'aligner la source lumineuse avec les différents miroirs. Ainsi, lorsqu'un composant optique est en panne, avec les inclinomètres existants, il faut démonter le composant optique, le remplacer et le remonter, puis réaligner le faisceau optique, toutes ces opérations étant réalisées au niveau du pot, dans un volume souvent difficilement accessible. Avec l'inclinomètre selon l'invention, il suffit de démonter le composant optique, le remplacer et le remonter, sans alignement particulier, toutes ces opérations étant réalisées dans un espace protégé éloigné accessible.

L'invention est également relative à un système de mesure comportant un inclinomètre tel qu'exposé précédemment dans au moins l'un de ses modes de réalisation et des moyens de détermination de la variation d'inclinaison de la structure à partir des valeurs relevées par les dispositifs de mesure optique.

Les dispositifs de mesure optique de l'inclinomètre, du type dispositifs à fibres optiques couplés à une source lumineuse commune permettent avantageusement de contrôler et minimiser la dérive du système de mesure, plus spécifiquement la dérive long terme du système de mesure, mais également de diminuer les bruits atmosphérique, thermique, ..., dans toutes les bandes de fréquences.

L'invention est également relative à l'utilisation du système de mesure à la mesure de déformations géophysiques.

## Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées dans lesquelles :

la figure 1 illustre schématiquement le principe d'un mode de réalisation particulier de l'inclinomètre objet de l'invention placé dans un forage horizontal, pour une position initiale donnée,

la figure 2 illustre schématiquement le principe d'un mode de réalisation particulier de l'inclinomètre objet de l'invention placé dans un forage horizontal, pour une position inclinée, de manière exagérée, obtenue suite à une déformation du milieu environnant,

la figure 3 est un agrandissement de l'inclinomètre représentant deux pots communicants cylindriques et les dispositifs de mesure optique associés,

la figure 4 illustre des courbes de comparaison des niveaux de bruit obtenus avec quatre instruments de mesure dont l'interféromètre selon l'invention,

la figure 5 illustre la différence entre les mesures de l'inclinomètre selon l'invention et celle de l'inclinomètre longue base à capteur LVDT,

les figures 6a, 6b, 6c représentent une comparaison entre les résultats obtenus avec l'inclinomètre selon l'invention et celle de l'inclinomètre longue base à capteur LVDT, lors du séisme de Sumatra le 11 avril 2012,

les figures 7a et 7b illustrent la différence entre les mesures de l'inclinomètre selon l'invention et celle de l'inclinomètre longue base à capteur LVDT, sur une période de 36 heures,

les figures 8a et 8b représentent une comparaison entre les résultats de mesure d'inclinaison obtenus sur plusieurs mois avec un inclinomètre de l'invention selon deux modes de réalisation et ceux d'un inclinomètre à capteur LVDT,

les figures 9a et 9b illustrent la différence entre la mesures d'inclinaison obtenus avec un inclinomètre de l'invention selon deux modes de réalisation,

les figures 10a et 10b illustrent une mesure de pression atmosphérique environnant l'inclinomètre selon deux modes de réalisation,

les figures 11a et 11b représentent une comparaison de l'amplitude du bruit spectral pour un inclinomètre de l'invention selon deux modes de réalisation.

## Description détaillée de modes de réalisation de l'invention

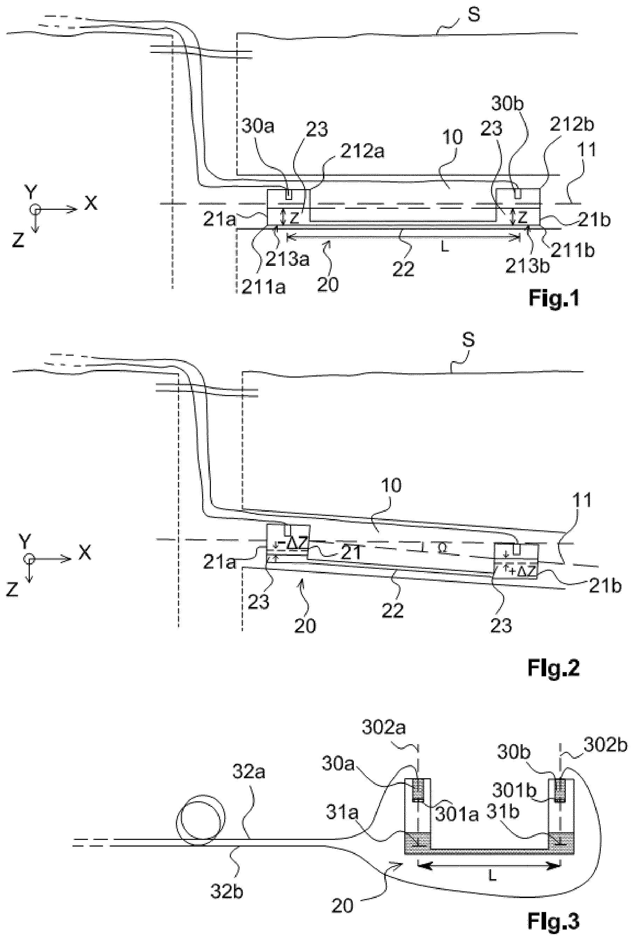

Un exemple de système de mesure, conforme à l'invention, de variation d'inclinaison d'une structure comporte un inclinomètre 20 schématiquement représenté sur la figure 1.

Dans l'exemple présenté, cette structure est la croute terrestre dans lequel un forage 10 profond a été percé et dans lequel est introduit l'inclinomètre 20. L'exemple de réalisation de l'inclinomètre est décrit de manière détaillée dans son application au cas d'une mesure de variation d'inclinaison du forage pour des applications sismologiques. Ce choix n'est pas limitatif et l'invention s'applique également à d'autres applications, tels que par exemple dans le domaine du génie civil. Le mode de couplage n'est également pas limitatif, on peut également installer ces instruments le long des parois d'un tunnel ou d'une galerie horizontale.

Dans toute la suite de la description, sauf mention contraire, au niveau du forage réalisé à partir d'un sol S, on définira les termes horizontal et vertical, en référence à la gravité terrestre. Le terme « vertical » désigne donc une direction sensiblement parallèle à un vecteur d'accélération de la gravité terrestre, tandis que le terme « horizontal » désigne une direction sensiblement perpendiculaire à la verticale ainsi définie. L'axe vertical est représenté par l'axe Z d'un repère orthonormé XYZ dans l'espace illustré sur la figure 1. Les termes « haut », « bas », « supérieur » et « inférieur » font référence à la direction verticale Z du repère XYZ. Ainsi, les termes « haut » et « supérieur » désignent une direction dirigée vers le sol S, tandis que les termes« bas » et « inférieur » désignent une direction de sens opposé. Le terme « hauteur » ou « altitude » est définit selon la direction verticale.

Le forage 10 peut être réalisé à une profondeur de l'ordre de quelques mètres à plusieurs centaines de mètres par rapport au sol S. Plus la profondeur de forage est important, plus on peut s'affranchir des bruits mécaniques (déformations locales de la roche) provenant de la surface, tels que par exemple la température, la charge hydrologique ou encore la pression atmosphérique.

Dans l'exemple de la figure 1, le forage 10 est horizontal, c'est-à-dire avec un axe longitudinal 11 présentant un angle d'inclinaison nul par rapport à l'axe horizontal X. Cette position horizontale où l'axe longitudinal 11 présente un angle d'inclinaison nul par rapport à l'axe horizontal X définit par la suite une position initiale donnée du forage.

Dans l'exemple de la figure 2, l'axe horizontal 11 du forage 10 est incliné d'un angle d'inclinaison non nul $\Omega$ par rapport à l'axe horizontal X, suite à une déformation de la croute terrestre, ci-après dite milieu environnant.

L'inclinomètre 20 suivant l'invention est dit hydrostatique ou longue base. L'inclinomètre 20 est basé sur le principe des vases communicants.

L'inclinomètre 20 comporte :

- un premier pot 21a comportant un volume et une hauteur z donnés de liquide 23,
- un deuxième pot 21b comportant un même volume et une même hauteur z du même liquide 23,
- un moyen de communication 22 apte à relier les deux pots 21a, 21b entre eux, et permettant au liquide 23 de s'écouler entre les deux pots lorsque le positionnement en hauteur (ou altitude) des deux pots par rapport à l'axe horizontal X est différent.

Les pots 21a, 21b sont espacés d'une distance L, variant de quelques mètres à plusieurs centaines de mètres, voire plus.

Les pots 21a, 21b présentent une déformation négligeable lors de leur implémentation dans le forage 10. Ils comportent chacun, à une extrémité basse 211a, 211b, une face inférieure 213a, 213b destinée à être placée en contact avec une surface du forage 10 pour coupler l'inclinomètre 20 audit forage lorsque ledit inclinomètre est introduit dans ledit forage, comme illustré sur les figures 1 et 2. Les pots 21a, 21b sont solidairement fixés, au niveau de leur face inférieures 213a, 213b.

Les pots sont réalisés dans un matériau solide et étanche de sorte à résister aux fortes contraintes présentes lors de leur installation en forage. De plus, pour éviter l'oxydation, les pots sont réalisés dans une matière inoxydable.

Lorsque le forage 10 est dans sa position initiale, le moyen de communication 22 relie les deux pots 21a, 21b est positionné sensiblement à la même hauteur (ou altitude) que les extrémités basses des pots.

Dans un exemple préféré de réalisation, le moyen de communication 22 est un tube longitudinal horizontal, rigide ou souple, relié aux deux pots 21a, 21b au niveau de leurs extrémités basses respectives 211a, 211b.

Le moyen de communication 22 est rempli ou semi rempli de liquide 23.

Pour faciliter le remplissage et l'écoulement du liquide 23 entre les pots, le moyen de communication 22 est réalisé dans une matière non mouillante, telle que par exemple le polytétrafluoroéthylène (plus connu sous l'acronyme PTFE ou téflon).

Le liquide 23 est injecté en circuit fermé à l'aide d'une pompe péristaltique, via le moyen de communication 22.

Les pots 21a, 21b sont avantageusement fermés à une extrémité haute 212a, 212b, opposée à l'extrémité basse 211a, 211b, de sorte à les rendre étanche à l'air et à des fluides externes éventuellement présents dans le forage 10.

Dans un exemple préféré de réalisation, les pots 21a, 21b se présentent sous la forme d'un récipient creux, par exemple cylindrique, de dimension inférieure à un diamètre du forage de sorte à pouvoir être inséré sans difficulté dans le forage 10.

Dans un exemple de réalisation, le liquide 23 utilisé est du mercure, de part ses propriétés de viscosité, sa très faible sensibilité aux effets de pression et sa très faible évaporation.

Dans un exemple préféré de réalisation, le liquide 23 utilisé est de l'eau pure, car offrant un très bon compromis entre sensibilité thermique, viscosité et coût. De plus, l'eau pure est un liquide non polluant pour l'environnement, contrairement au mercure.

Selon le principe des vases communicants, une variation positive $\Delta z$, respectivement négative $-\Delta z$, de la hauteur du niveau de liquide 23 dans un des deux pots 21a, 21b engendre une variation négative $-\Delta z$, respectivement positive $\Delta z$, de hauteur du niveau de liquide 23 dans l'autre pot 21b, 21a. Ces variations de hauteur de niveau sont identiques, en valeur absolue. L'inclinomètre longue base 20 est donc avantageusement un dispositif mécanique de mesure différentielle qui présente l'avantage de s'affranchir entres autres des bruits thermiques, de la dilatation du liquide, des effets de pressions.

Il apparaît donc évident, selon ce principe, que les variations $\Delta z$ de hauteur du niveau de liquide 23 sont d'autant plus importantes que les pots 21a, 21b sont éloignés l'un de l'autre.

De plus, l'augmentation de la distance entre les deux pots permet d'augmenter mécaniquement la résolution et la stabilité du système de mesure.

Ce principe s'adapte aisément à l'application présentée ici.

Lorsque le forage 10 est dans sa position initiale, c'est à dire selon l'axe horizontal X, comme illustré sur la figure 1, l'altitude des pots 21a, 21b dans le forage 10 est sensiblement identique, et la hauteur z de niveau du liquide 23 dans lesdits pots est également sensiblement identique entre elles.

Une inclinaison du forage 10, due à des déformations du milieu environnant, entraîne une modification relative de l'altitude entre les deux pots 21a, 21b de l'inclinomètre.

La modification de l'altitude entre les deux pots 21a, 21b de l'inclinomètre 20 induit par conséquent respectivement une modification de la hauteur du niveau du liquide contenu dans chaque pot.

Ainsi, lorsque le forage 10 présente un angle d'inclinaison Ω suite à une déformation du milieu environnant, comme illustré sur la figure 2, un pot est plus élevé en altitude que l'autre. La variation d'inclinaison ΔΩ engendre le déplacement d'une partie du liquide d'un pot le plus élevé vers le pot le plus bas. Ce déplacement provoque une variation de hauteur Δz du niveau de liquide dans chaque pot. Cette variation est positive dans un pot (le pot 21b sur la figure 2) et négative dans l'autre pot (le pot 21a sur la figure 2). Ces variations de hauteur sont égales et opposées. Elles sont proportionnelles à la variation d'inclinaison du forage entre les deux pots.

La relation entre la variation d'inclinaison et la variation de hauteur du niveau de liquide s'exprime de la façon suivante :

$$\tan \Omega = \frac{dH}{L} = \frac{\left( + \Delta z - \left( - \Delta z \right) \right)}{L} = \frac{2\Delta z}{L} \approx \Omega \qquad (1)$$

où L représente la distance entre les deux pots de l'inclinomètre,

+Δz représente la variation positive de hauteur du niveau du liquide dans un pot,

-Δz représente la variation négative de hauteur du niveau du liquide dans l'autre pot,

H représente la différence de hauteur entre les niveaux de liquide des deux pots.

Les variations Δz de hauteur du niveau du liquide 23 étant destiné à mesurer de faibles déformations du milieu environnant, ces variations sont très petites, de l'ordre de quelques nanomètres à quelques millimètres par rapport à la longueur caractéristique de l'inclinomètre, c'est à dire la distance L, comprise entre 10 m et 1 km, entre les deux pots. La valeur de la tangente de l'angle d'inclinaison du milieu environnant peut s'approximer par la valeur de l'angle d'inclinaison du milieu environnant.

Par conséquent, de la mesure de la variation de hauteur de niveau de liquide découle la variation de l'inclinaison du milieu environnant.

Pour une inclinaison donnée, plus les pots sont éloignés, plus le rapport signal sur bruit est important.

Pour avoir des instruments avec une stabilité de l'ordre de $10^{-7}$ rad/an et une résolution inférieure à $10^{-9}$ rad, la distance L entre les pots est d'au moins 30 m de long.

Pour mesurer ces variations Δz de hauteur de niveau de liquide, égales et opposées dans les deux pots 21a, 21b, l'inclinomètre 20 comporte en outre, comme illustré sur la figure 3, deux dispositifs de mesure optique 30a, 30b, un dispositif de mesure optique étant associé à un pot. Chaque dispositif de mesure optique 30a, 30b est apte et destiné à mesurer une variation de hauteur du niveau de liquide dans le pot associé. Chaque dispositif de mesure optique 30a, 30b forme un dispositif de mesure interférométrique.

Les deux dispositifs de mesure optique 30a, 30b sont positionnés par rapport à leur pot respectif 21a, 21b de telle sorte qu'ils présentent chacun un axe de mesure optique 302a, 302b sensiblement orthogonal à l'horizontalité du liquide dans le pot, lorsque l'inclinomètre 20 est en position initiale.

Les deux dispositifs de mesure optique permettent de mesurer à tout instant la variation Δz de hauteur du niveau du liquide, à partir de la hauteur z du niveau de liquide lorsque les pots de l'inclinomètre et le forage sont dans la position initiale.

Une variation Δz de hauteur du niveau de liquide, due à une déformation du milieu environnant, est très faible par rapport à la distance L entre les deux pots 21a, 21b de l'inclinomètre 20. Les dispositifs de mesure optique 30a, 30b sont donc choisis de sorte à pouvoir mesurer des variations de hauteur Δz très faibles, en l'occurrence de l'ordre d'au moins $10^{-9}$m.

Les dispositifs de mesure optique 30a, 30b permettent avantageusement de réaliser des mesures sans contact, au contraire par exemple des dispositifs à courant induit de type capteur LVDT, qui réalisent des mesures avec contact.

De plus, les dispositifs de mesure optique permettent une augmentation de la dynamique de mesure de l'inclinomètre, c'est-à-dire la variation maximale de hauteur du niveau de liquide dans un pot.

Dans l'exemple des capteurs capacitifs ou LVDT, la dynamique de mesure est de l'ordre de quelques millimètres.

Avec les dispositifs de mesure optique, la dynamique de mesure est au moins dix fois plus grande, au moins de l'ordre du centimètre. Il faut juste s'assurer que l'extrémité du dispositif de mesure optique en vis-à-vis du liquide soit au-delà de la variation maximale de hauteur du niveau de liquide.

Ainsi, la mise en place des pots 21a, 21b de l'inclinomètre 20 dans le forage 10 nécessite une précision moindre que les inclinomètres longue base existants. En effet, le réglage, dans le forage 10, du positionnement en altitude des pots d'un inclinomètre longue base existant doit se faire au millimètre près, puisque la dynamique de mesure est de l'ordre du millimètre, avec des instruments de mesure très précis, tels que par exemple des théodolites, tandis que le réglage, dans le forage 10, du positionnement en altitude des pots de l'inclinomètre selon l'invention peut donc se faire au centimètre près, puisque la dynamique de mesure est de l'ordre du centimètre, donc avec des instruments de mesure moins contraignants.

Dans un mode préféré de réalisation, les dispositifs de mesure optique sont des dispositifs à fibres optiques.

De tels dispositifs à fibres optiques sont avantageux car les fibres permettent de déporter les composants optiques actifs, tels qu'une source lumineuse émettrice et/ou un moyen de détection des signaux interférométriques, dans un espace protégé et non soumis aux contraintes de l'environnement extérieur, telles que par exemple la température, le rayonnement électromagnétique, les radiations.

Dans un exemple de réalisation de dispositif de mesure optique de mesure, on peut citer le dispositif de mesure à fibre optique extrinsèque décrit dans la demande de brevet français FR1056230.

Chaque dispositif de mesure optique 30a, 30b comporte :

- une source lumineuse (non représentée sur les figures), de longueur d'onde centrale $\lambda_0$, de préférence une source lumineuse laser, pour générer un faisceau lumineux en direction du pot associé,
- une surface réfléchissante 31a, 31b positionnée à l'intérieur du pot 20a, 20b,
- une fibre optique, dite fibre de mesure 32a, 32b, pour transporter et guider le faisceau lumineux vers le pot associé, une extrémité 301a, 301b de ladite fibre de mesure, fixée au niveau de l'extrémité haute 212a, 212b du pot 21a, 21b et placée en regard de la surface réfléchissante 31a, 31b, formant avec ladite surface réfléchissante une cavité optique externe de Fabry-Pérot,
- un moyen de détection d'un signal interférométrique (non représenté sur les figures), ledit signal interférométrique comportant l'information sur le déplacement du niveau de liquide par rapport à l'extrémité de la fibre de mesure, et étant généré par une interférence entre un faisceau lumineux de référence et un faisceau de mesure, ledit faisceau lumineux de référence correspondant à une fraction du faisceau lumineux issu de la source lumineuse qui est réfléchie par l'extrémité de la fibre, et ledit faisceau lumineux de mesure correspondant à une fraction du faisceau lumineux issu de la source lumineuse qui est réfléchie par la surface réfléchissante et qui parcourt un trajet optique dans la cavité de Fabry-Pérot dont la variation est fonction de la variation de hauteur du niveau de liquide dans le pot à déterminer.

La variation de hauteur du niveau de liquide dans le pot est donc fonction d'une variation de chemin optique.

La surface réfléchissante 31a, 31b est utilisée en vis-à-vis de chaque extrémité de fibre, de sorte à réfléchir de manière maximale le faisceau lumineux de mesure.

Dans un autre exemple de réalisation, la surface 31a, 31b utilisée pour réfléchir le faisceau lumineux de mesure est une surface rétro-réfléchissante.

Dans une variante avantageuse de réalisation, pour éliminer les faibles variations de longueur d'onde entre les différentes sources lumineuses, les deux dispositifs de mesure optique présentent une source lumineuse commune. Le faisceau issu de la source lumineuse commune est scindé, via un coupleur 1*2 voies, en deux faisceaux, chaque faisceau se propageant, via une fibre, vers un coupleur puis vers une fibre de mesure et une cavité optique Fabry-Pérot formée par l'extrémité de la fibre de mesure et une surface réfléchissante. L'ensemble des dispositifs de mesure optique forme avantageusement un système optique de mesure différentielle, qui présente l'avantage de s'affranchir entre autres des dérives liées à la partie optique de l'inclinomètre 20, telles que par exemple une dérive thermique, une dérive en longueur d'onde, une dérive liée à la variation de l'indice de réfraction de l'air.

Dans un mode de réalisation, la surface réfléchissante 31a, 31b est positionnée fixement, par des moyens à la portée de l'homme du métier (non représentés sur les figures dans un souci de clarté), dans le liquide 23, d'indice de réfraction $n_2$.

Dans ce cas, pour un dispositif de mesure optique, la variation absolue de hauteur de niveau de liquide dans le pot s'exprime de la façon suivante :

$$|\Delta z| = \frac{\Delta \theta}{2\pi} * \frac{\lambda_0}{2} * \frac{1}{|n_2 - n_1|}$$

où $\Delta \theta$ représente le déphasage entre une intensité de référence et une intensité de mesure,
$n_1$ représente l'indice de réfraction du milieu traversé entre l'extrémité de la fibre et le liquide.

Généralement, le milieu traversé est l'air, d'indice $n_1 = 1$.

Dans un autre mode de réalisation, afin de bloquer l'évaporation du liquide, les pots comportent, en outre, au dessus du volume de liquide, un deuxième volume de liquide, moins dense.

Dans un exemple de réalisation, ce deuxième liquide est de l'huile de silicone, présentant une viscosité de l'ordre de cent à mille fois plus grande que celle de l'eau. L'huile de silicone présente une pression de vapeur quasi négligeable, permettant de bloquer toute évaporation du liquide.

Dans ce mode de réalisation, chaque surface réfléchissante 31a, 31b est positionnée fixement dans le volume de deuxième liquide, d'indice $n_3$, au dessus du premier niveau de liquide, par l'exemple au niveau de l'eau.

Dans ce cas, pour un dispositif de mesure optique, la variation absolue de hauteur de niveau de liquide dans le pot s'exprime de la façon suivante :

$$\left|\Delta z\right| = \frac{\Delta \theta}{2\pi} * \frac{\lambda_0}{2} * \frac{1}{\left|n_3 - n_1\right|}$$

où $\Delta\theta$ représente le déphasage entre une intensité de référence et une intensité de mesure,

$n_1$ représente l'indice de réfraction du milieu traversé entre l'extrémité de la fibre et le deuxième liquide.

Généralement, le milieu traversé est l'air, d'indice $n_1 = 1$.

Le système de mesure d'une variation d'inclinaison comporte en outre des moyens de détermination (non représenté) de la variation d'inclinaison du forage à partir des signaux interférométriques mesurés par les moyens de détection des dispositifs de mesure optique de mesure, à partir de la relation (1).

Les pots et les dispositifs de mesure optique associés sont au nombre de deux, comme illustré sur les figures 1 et 2. Bien que les pots et les dispositifs de mesure optique associés soient illustrés sur les figures 1 et 2 et décrits au nombre de deux, le nombre de ces pots et dispositifs de mesure optique n'est pas limité à celui décrit et illustré. Ainsi, il est possible, sans se départir du cadre de l'invention, de réaliser un système de mesure comportant plus de trois pots communicants entre eux deux à deux et trois dispositifs de mesure associés et présentant les mêmes avantages que pour un système de mesure à deux pots et dispositifs de mesure associé. Un nombre de dispositifs de mesure au-delà de trois permet avantageusement de couvrir des zones de grandes étendues.

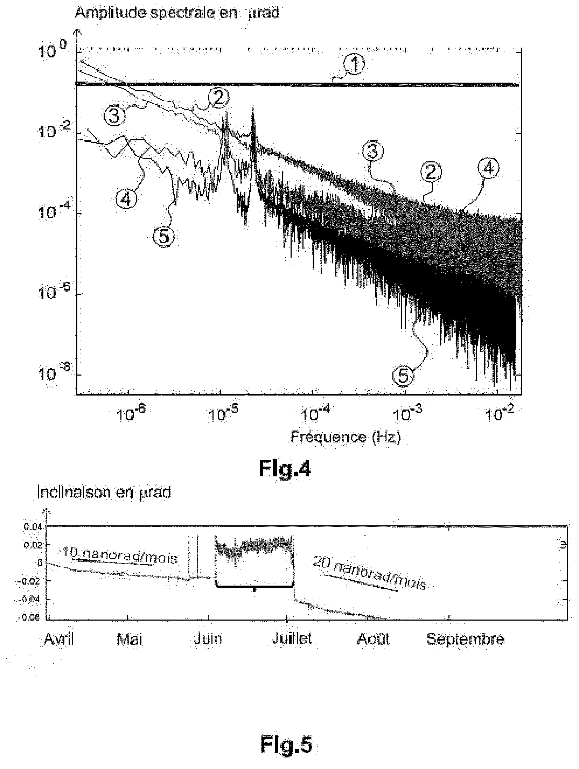

La figure 4 illustre la comparaison des niveaux de bruit obtenus avec quatre instruments de mesure dans les mêmes conditions de fonctionnement, sur une bande de fréquence variant d'environ $10^{-6}$ à $10^{-2}$ Hz.

La courbe 1 représente le niveau de bruit obtenu avec un GPS (Global Positioning System).

Les courbes 2 et 3 représentent le niveau de bruit obtenu avec un inclinomètre de forage vertical Lily d'Applied Geomechanics (marque déposée), suivant les composantes Nord-Sud et Est-Ouest.

La courbe 4 représente le niveau de bruit obtenu avec un inclinomètre longue base à capteur LVDT de Fogale Nanotech, dit inclinomètre (ou instrument) longue base à mesure capacitive.

La courbe 5 représente le niveau de bruit obtenu avec l'inclinomètre selon un mode de réalisation de l'invention, avec des dispositifs à fibres optique avec le mode source lumineuse commune, dit inclinomètre (ou instrument) longue base à mesure optique.

Pour l'instrument longue base à mesure capacitive, l'enregistrement des données a été effectué en profondeur dans un tunnel test du CERN (Conseil Européen pour la Recherche Nucléaire). L'instrument comporte sept pots de mesure répartis uniformément et longitudinalement sur une distance totale de 140 m.

Pour l'instrument longue base à mesure optique, l'enregistrement a également été effectué dans un tunnel, celui du LSBB (Laboratoire Souterrain à Bas Bruit, à Rustrel, en France). L'instrument comporte quatre pots de mesure répartis uniformément et longitudinalement sur une distance totale de 147 m.

La source lumineuse laser commune est une diode laser DFB de type ML1354 de Modulight® émettant à une longueur d'onde centrale $\lambda_0$ de 1310 nm. La diode laser est alimentée par un courant d'injection de 30 mA, et a une puissance de sortie maximale de 6 mW. Les fibres optiques sont des fibres de type SMF-28 de Corning®. Les fibres optiques présentent une longueur de 270m. Le coupleur optique est un coupleur 1*2 SMF 28 de China Daheng Group. Les pots sont en pyrex®. Les pots sont couplés directement à la roche du tunnel. Le liquide contenu dans les pots est de l'eau pure distillée.

Pour l'inclinomètre de forage vertical, l'enregistrement a également été effectué dans le tunnel du LSBB. L'instrument a une longueur de 1m avec mesure à bulle résistive.

On constate que dans la gamme de fréquence basse, c'est-à-dire inférieure à $10^{-6}$ Hz, les niveaux de bruit sont sensiblement identiques pour les deux instruments longue base de mesure (capacitive et optique).

Dans la gamme de fréquence comprise sensiblement entre $5.10^5$ Hz et $2.10^{-2}$ Hz, le niveau de bruit de l'inclinomètre longue base à mesure optique décroit de façon monotone pour les deux instruments longue base (capacitive et optique) mais le niveau de bruit de l'inclinomètre longue base à mesure capacitive, quant à lui, montre une croissance du niveau de bruit à partir de $6.10^{-3}$ Hz et se poursuit jusqu'à $2.10^{-2}$ Hz.

Dans la gamme de fréquence comprise sensiblement entre $5.10^{-5}$ Hz et $6.10^{-3}$ Hz, l'inclinomètre longue base à mesure optique présente une résolution dix fois meilleure que celle de l'inclinomètre longue base à mesure capacitive. Au-delà de $6.10^{-3}$ Hz, l'inclinomètre longue base à mesure optique présente une résolution cent fois meilleure que celle de l'inclinomètre longue base à mesure capacitive.

Quelque soit la gamme de fréquence, la résolution de l'inclinomètre longue base à mesure optique est de cent à mille fois meilleure que celle du GPS ou de l'inclinomètre de forage vertical.

La figure 5 illustre la différence entre les mesures de l'inclinomètre longue base à mesure optique et celle de l'inclinomètre longue base à mesure capacitive, sur une période de cinq mois, dans les mêmes conditions (choix des éléments constitutifs de chaque inclinomètre, distances entre les pots, emplacement...) que celles décrites pour obtenir les résultats de la figure 4.

Sur la période d'avril à juin, une différence (donnée par la pente) de seulement 10 nrad/mois est mesurée. Cette différence est due à une dérive d'un des deux instruments, en l'occurrence l'inclinomètre longue base à mesure capacitive. En effet, sur la période de juin à début juillet, l'inclinomètre longue base à mesure capacitive a subi des disfonctionnements dus à des problèmes au niveaux du circuit électrique, et on constate pendant cette même période que la différence mesurée est relativement plane, mais plus bruitée car liée à l'augmentation du bruit dans l'inclinomètre longue base à mesure capacitive. Le circuit électronique de l'inclinomètre longue base à mesure capacitive a été remplacé début juillet. A partir de ce moment-là, la pente entre les mesures des deux instruments s'accroit de 20nrad/mois, dans la même direction que la pente observée entre avril et juin. Ceci prouve bien que l'hypothèse selon laquelle l'inclinomètre longue base à mesure optique ne semble pas dériver dans le temps puisque les deux mesures sont relativement constantes sur une période d'un mois, lorsque l'inclinomètre longue base à mesure capacitive ne fonctionnait pas.

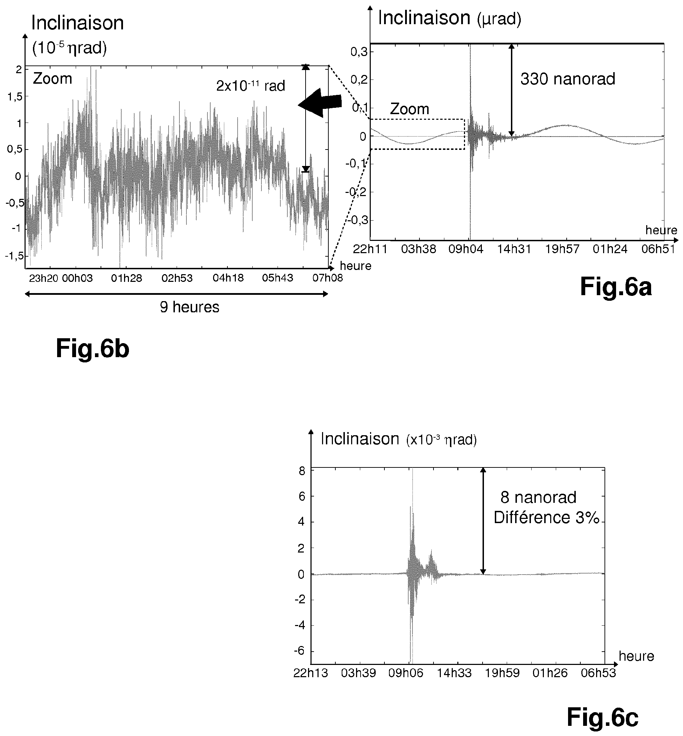

Les figures 6a, 6b, 6c représentent une comparaison entre les résultats obtenus avec l'inclinomètre longue base à mesure optique et celle de l'inclinomètre longue base à mesure capacitive, lors du séisme de Sumatra le 11 avril 2012, de magnitude 8.7. Les mesures ont été réalisées dans les mêmes conditions (choix des éléments constitutifs de chaque inclinomètre, distances entre les pots, emplacement,...) que celles décrites pour obtenir les résultats des figures 4 et 5.

La figure 6a représente une comparaison entre les mesures des deux instruments sur une durée de 40 heures pendant le séisme. On superpose à la même échelle la différence de mesure entre l'inclinomètre longue base à mesure capacitive et l'inclinomètre longue base à mesure optique.

La figure 6b est un agrandissement d'une partie de la courbe de la figure 6a, avant le séisme sur une même différence temporelle entre la mesure capacitive et la mesure optique sur une durée de 9 heures. Cette figure 6b illustre que les deux mesures, capacitive et optique, sont en accord, avec une erreur maximum de $2.10^{-11}$ rad.

La figure 6c représente un agrandissement d'une partie de la courbe de la figure 6a, pendant le séisme, sur la même différence temporelle entre la mesure capacitive et la mesure optique sur une durée de 40 heures. Cette figure 6c illustre que les 2 mesures, capacitive et optique, sont en accord, avec une erreur maximum de 8 nrad.

Avant le séisme, une différence entre les deux mesures de $2.10^{-11}$ rad est obtenue, montrant que la précision de l'inclinomètre longue base à mesure optique est du même ordre de grandeur que celle de l'inclinomètre longue base à mesure capacitive.

Pendant la durée du séisme, cette différence augmente de sensiblement à 3% pour une amplitude totale de 8nrad, mais cette différence reste très faible.

On peut ainsi conclure que l'inclinomètre selon l'invention a une précision d'au moins 2 à $5.10^{-11}$ rad.

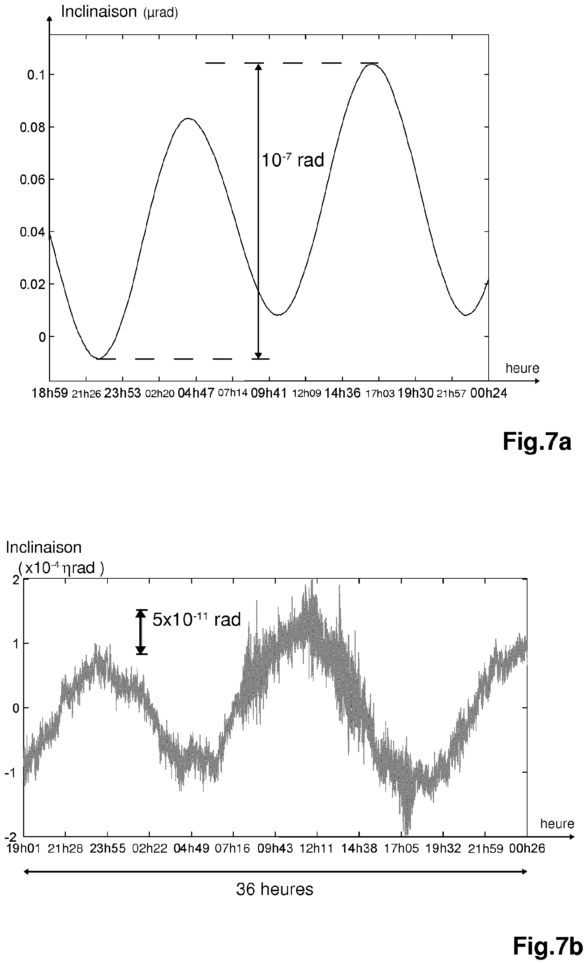

La figure 7a illustre la courbe des mesures obtenues à partir de l'inclinomètre selon l'invention, sur une période de 36 heures, et correspond à la marée terrestre.

La figure 7b illustre la différence entre les mesures de l'inclinomètre selon l'invention et celle de l'inclinomètre longue base à capteur LVDT, sur la période de 36 heures. Une différence de seulement $5.10^{-11}$ rad est obtenue.

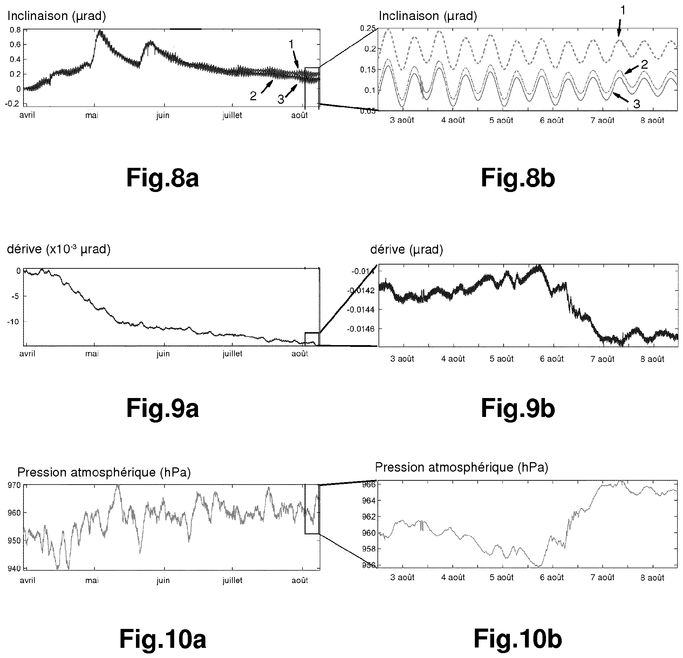

Les figures 8a à 11b illustrent le comportement, en termes de dérive long terme et de faible sensibilité, voir insensibilité, aux radiations électromagnétiques, de l'inclinomètre selon deux modes de réalisation 20 et du système de mesure associé en comparaison avec un inclinomètre à capteur LVDT du marché.

Les figures 8a et 8b illustrent la comparaison entre plusieurs mesures d'inclinaison obtenues sur une durée de plusieurs mois, pour trois inclinomètres différents :

- inclinomètre A : inclinomètre longue base à capteurs LVDT,
- inclinomètre B : inclinomètre avec deux dispositifs à fibres optique extrinsèque, une source lumineuse spécifique par dispositif à fibre optique extrinsèque,
- inclinomètre C : inclinomètre longue base à mesure optique (inclinomètre avec deux dispositifs à fibres optique extrinsèque, une source lumineuse avec le mode source lumineuse commune)

Pour l'inclinomètre A, l'enregistrement des données a été effectué en profondeur dans un tunnel du LSBB. L'inclinomètre est horizontal et comporte deux pots de mesure distants d'une longueur de 147 m et deux capteurs LVDT.

Chaque capteur utilisé est un capteur LVDT dit « transformateur différentiel » (voir Boudin et al., 2008, « A silica long base tiltmeter with high stability and resolution », Review of Scientific Instruments, vol 79 (3), 034502-1, 034502-11). Il est composé d'un noyau, dénommé ferrite, se déplaçant dans un bobinage constitué d'un enroulement primaire et de deux enroulements secondaires placés symétriquement par rapport à l'enroulement primaire. La ferrite est calée sur une tige réalisée en silice. Les trois bobines sont enroulées concentriquement autour de l'axe de déplacement sur un support, de type mandrin, réalisé en silice. Le déplacement relatif de la ferrite par rapport au mandrin traduit le mouvement recherché. Les trois bobines sont reliées à une carte électronique qui comporte entre autre un oscillateur et un circuit de détection.

Les deux capteurs LVDT présentent leurs propres dérives et leurs propres sensibilités au bruit externe.

Pour les inclinomètres B et C, l'enregistrement a également été effectué dans un tunnel du LSBB. Chaque inclinomètre est horizontal. Chaque inclinomètre comporte deux pots de mesure distants d'une longueur de 147 m.

La source lumineuse laser commune est une diode laser DFB de type ML1354 de Modulight® émettant à une longueur d'onde centrale $\lambda_0$ de 1310 nm. La diode laser est alimentée par un courant d'injection de 30 mA, et a une puissance de sortie maximale de 6 mW. Les fibres sont des fibres de type SMF-28 de Corning®. Les fibres présentent une longueur d'au moins 120m. Une telle longueur permet de déporter les composants optiques actifs (sources lumineuses), les moyens de détection,..., dans un espace protégé, un sas à l'entrée du tunnel. Les pots sont en pyrex®. Les pots sont coupés directement à la roche du tunnel. Le liquide contenu dans les pots est de l'eau pure distillée.

Pour l'inclinomètre C, le coupleur optique est un coupleur 1*2 SMF 28 de China Daheng Group.

La courbe 1 représente l'inclinaison mesurée par l'inclinomètre A, la courbe 2 représente l'inclinaison mesurée par l'inclinomètre B, la courbe 3 représente l'inclinaison mesurée par l'inclinomètre C.

La figure 8b est un agrandissement d'une partie de la figure 8a.

Au vu des trois courbes, on observe que l'inclinomètre le moins stable est l'inclinomètre A et le plus stable est l'inclinomètre C.

La courbe de la figure 9a représente la différence entre la mesure d'inclinaison de l'inclinomètre B et celle de l'inclinomètre C. La courbe de la figure 9b est un agrandissement d'une partie de la courbe de la figure 9a.

Les mesures ont été réalisées dans les mêmes conditions (choix des éléments constitutifs de chaque inclinomètre, distances entre les pots, emplacement,...) que celles décrites pour obtenir les résultats des figures 8a et 8b.

On constate une différence de mesure jusqu'à 15nrad, sur une durée de plusieurs mois (4 mois et demi). Une telle différence de mesure illustre parfaitement la dérive de l'inclinomètre B par rapport à l'inclinomètre C.

La courbe de la figure 10a représente la mesure de la pression atmosphérique environnant les inclinomètres B et C par un capteur de pression, lors des mesures. Le capteur de pression est positionné à mi distance des deux pots de chaque inclinomètre. Le capteur de pression est un capteur de pression barométrique, du type modèle 278 de SETRA. La courbe de la figure 10b est un agrandissement d'une partie de la courbe de la figure 10a. Les mesures ont été réalisées dans les mêmes conditions (choix des éléments constitutifs de chaque inclinomètre, distances entre les pots, emplacement,...) que celles décrites pour obtenir les résultats des figures 8a et 8b.

On observe une anti-corrélation importante entre la dérive long terme de l'inclinomètre B (figure 9a) et la pression atmosphérique mesurée (figure 10a). Cette anti-corrélation est d'autant plus marquée, sur une plus courte durée (une dizaine de jours) si on compare les figures 9b et 10b. Ceci illustre la sensibilité de l'inclinomètre B à la pression atmosphérique.

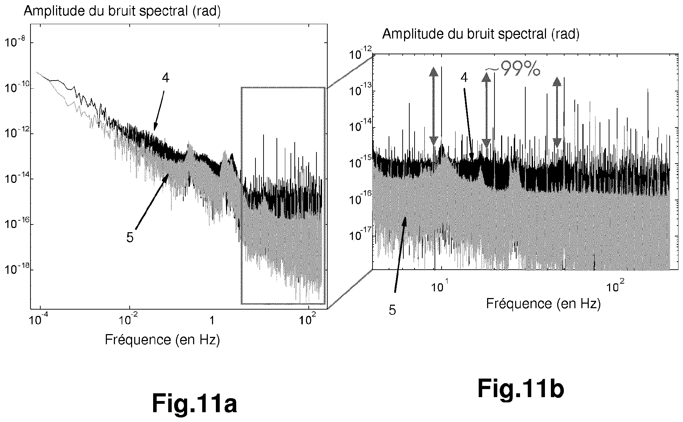

La figure 11a illustre la comparaison de l'amplitude du bruit spectral entre l'inclinomètre B et l'inclinomètre C, sur une plage de fréquences comprise entre $10^{-4}$ Hz et $2 \times 10^2$ Hz. La figure 11b est un agrandissement d'une partie de la figure 11a. Les mesures ont été réalisées dans les mêmes conditions (choix des éléments constitutifs de chaque inclinomètre, distances entre les pots, emplacement,...) que celles décrites pour obtenir les résultats des figures 8a et 8b.

Sur les figures 11a et 11b, la courbe 4 représente l'amplitude du bruit spectral de l'inclinomètre B, la courbe 5 représente l'amplitude du bruit spectral de l'inclinomètre C.

Sur la figure 11b, on constate une différence notable entre l'amplitude du bruit spectral obtenu avec l'inclinomètre B (courbe 4) et l'amplitude du bruit obtenu avec l'inclinomètre C (courbe 5). Concernant l'inclinomètre B, on constate une faible sensibilité au champ électromagnétique, avec un niveau de bruit spectral compris entre $10^{-13}$ et $10^{-15}$ rad pour des fréquences comprises entre 10 et 200 Hz, principalement du au fait que la mesure est déportée. Concernant l'inclinomètre C, le bruit électromagnétique spectral est corrigé sensiblement par un facteur de 10 à 100 (jusqu'à 99%) par rapport à l'inclinomètre B soit des valeurs comprise entre $10^{-14}$ et $10^{-16}$ rad pour des fréquences comprises entre 10 et 200 Hz. Il est ainsi clair qu'une source lumineuse commune permet de diminuer très significativement le bruit électromagnétique.

A plus basse fréquence, par exemple entre $10^{-4}$ et 1 Hz, il est également possible de mesurer l'apport d'une source lumineuse commune de l'inclinomètre C sur la réduction de l'amplitude du bruit spectral par rapport à l'inclinomètre B. Le bruit électromagnétique spectral est diminué d'un facteur 5 à 10.

La description ci-avant illustre clairement que par ses différentes caractéristiques et leurs avantages, la présente invention atteint les objectifs qu'elle s'était fixée. En particulier, elle fournit un inclinomètre et un système de mesure qui permet de s'affranchir autant des dérives propres à la mécanique qu'à l'optique. L'inclinomètre présente une taille réduite afin qu'il soit aisément transportable et d'utilisation facile, d'où la possibilité d'une utilisation en forage horizontal ou en galerie, sur des grandes distances. Il est avantageusement réalisé en un matériau résistant à la chaleur, de façon à présenter une durée de vie importante. Ce critère est particulièrement important car le système de mesure est amené à mesurer les variations d'inclinaison d'une structure sur une période pouvant s'étaler sur plusieurs années.

Les matériaux le constituant lui permettent de résister à la chaleur. Du fait de la dérive compensée du système de mesure suivant l'invention, le système de mesure permet un suivi sur le long terme, par exemple sur une période s'étendant sur plusieurs jours, mois et/ou années.

L'invention est décrite dans le cas d'une application sismologique. L'invention est également applicable à la surveillance de sites de stockage géologique. En effet, certains systèmes géologiques perméables recouverts de formations étanches permettent de stocker des fluides tels que par exemple le dioxyde de carbone, le gaz naturel ou encore l'eau. En réponse à ce stockage, le système géologique se déforme faiblement. La mesure de ces déformations à l'aide d'inclinomètres selon l'invention installés dans des forages permet de suivre l'évolution du stockage et la migration des fluides dans la couche perméable. Du fait de la dérive compensée du système de mesure suivant l'invention, le système de mesure permet un suivi du stockage sur le long terme, par exemple sur une période s'étendant sur plusieurs jours, mois et/ou années. La mise en oeuvre de système de mesure dans cette application est du ressort de l'homme du métier.

**Revendications**

1. Inclinomètre (20) pour la mesure d'une variation d'inclinaison d'une structure depuis une position initiale donnée, comportant :

   - deux pots (21a, 21b), chaque pot comportant un même volume et une même hauteur d'un même liquide (23),
   - un moyen de communication (22) reliant lesdits deux pots et permettant au liquide de s'écouler entre les deux pots suivant le principe des vases communicants,
   - deux dispositifs de mesure optique (30a, 30b) à fibres optiques, un dispositif de mesure optique par pot, chaque dispositif de mesure optique mesurant une variation $\Delta z$ de hauteur de niveau de liquide (23) dans le pot associé, **caractérisé en ce que** les dispositifs de mesure optique (30a, 30b) sont couplés à une source lumineuse commune.

2. Inclinomètre (20) selon la revendication 1 dans lequel les dispositifs à fibres optiques (30a, 30b) sont des dispositifs à fibre optique extrinsèque, chaque dispositif de mesure optique (30a, 30b) comportant :

   - une source lumineuse, de longueur d'onde centrale $\lambda_0$, pour générer un faisceau lumineux en direction du pot associé,
   - une surface réfléchissante (31a, 31b) positionnée à l'intérieur du pot,
   - une fibre optique, dite fibre de mesure (32a, 32b), pour transporter et guider le faisceau lumineux vers le pot associé, une extrémité (301a, 301b) de ladite fibre de mesure, fixée au niveau d'une extrémité haute (212a, 212b) du pot (21a, 21b) et placée en regard de la surface réfléchissante (31a, 31b), formant avec ladite surface réfléchissante une cavité optique externe de Fabry-Pérot,
   - un moyen de détection d'un signal interférométrique, ledit signal interférométrique comportant l'information sur le déplacement du niveau de liquide par rapport à l'extrémité de la fibre de mesure, et étant généré par une interférence entre un faisceau lumineux de référence et un faisceau de mesure, ledit faisceau lumineux de référence correspondant à une fraction du faisceau lumineux issu de la source lumineuse qui est réfléchie par l'extrémité de la fibre, et ledit faisceau lumineux de mesure correspondant à une fraction du faisceau lumineux issu de la source lumineuse qui est réfléchie par la surface réfléchissante et qui parcourt un trajet optique dans la cavité de Fabry-Pérot dont la variation est fonction de la variation de hauteur du niveau de liquide dans le pot à déterminer,

   la source lumineuse étant commune aux deux dispositifs de mesure optiques, l'inclinomètre comporte un coupleur 1*2 voies, pour scinder le faisceau issu de la source lumineuse commune en deux faisceaux.

3. Système de mesure comportant un inclinomètre (20) conforme à l'une des revendications 1 ou 2 et des moyens de détermination de la variation d'inclinaison de la structure à partir des valeurs relevées par les dispositifs de mesure optique (30a, 30b).

4. Utilisation du système de mesure conforme à la revendication 3 pour la mesure de déformations géophysiques.

**Patentansprüche**

1. Neigungsmesser (20) für das Messen einer Neigungsschwankung einer Struktur aus einer gegebenen Ausgangsposition, umfassend:

   - zwei Becher (21a, 21b), wobei jeder Becher ein gleiches Volumen und eine gleiche Höhe einer gleichen Flüssigkeit (23) umfasst,
   - ein Kommunikationsmittel (22), welches die zwei Becher verbindet und der Flüssigkeit erlaubt, zwischen den zwei Bechern gemäß dem Prinzip der kommunizierenden Röhren zu fließen,
   - zwei optische Messvorrichtungen (30a, 30b) mit optischen Fasern, eine optische Messvorrichtung je Becher, wobei jede optische Messvorrichtung eine Schwankung Δz der Höhe des Flüssigkeitsniveaus (23) in dem zugeordneten Becher misst,

   **dadurch gekennzeichnet, dass** die optischen Messvorrichtungen (30a, 30b) an eine gemeinsame Lichtquelle gekoppelt sind.

2. Neigungsmesser (20) nach Anspruch 1, wobei die Vorrichtungen mit optischen Fasern (30a, 30b) Vorrichtungen mit extrinsischer optischer Faser sind, wobei jede optische Messvorrichtung (30a, 30b) umfasst:

   - eine Lichtquelle mit zentraler Wellenlänge $\lambda_0$, um einen Lichtstrahl in Richtung des zugeordneten Bechers zu erzeugen,
   - eine reflektierende Fläche (31a, 31b), die im Inneren des Bechers positioniert ist,
   - eine optische Faser, bezeichnet als Messfaser (32a, 32b), um den Lichtstrahl zu dem zugeordneten Becher zu befördern und zu führen, wobei ein Ende (301a, 301b) der Messfaser, das im Bereich eines hohen Endes (212a, 212b) des Bechers (21a, 21b) befestigt und gegenüber der reflektierenden Fläche (31a, 31b) platziert ist, mit der reflektierenden Fläche einen äußeren optischen Fabry-Pérot-Hohlraum bildet,
   - ein Mittel zum Ermitteln eines interferometrischen Signals, wobei das interferometrische Signal eine Information über die Verlagerung des Flüssigkeitsniveaus in Bezug auf das Ende der Messfaser umfasst und von einer Interferenz zwischen einem Referenz-Lichtstrahl und einem Messstrahl erzeugt wird, wobei der Referenz-Lichtstrahl einem Teil des von der Lichtquelle ausgegebenen Lichtstrahls entspricht, der von dem Ende der Faser reflektiert wird, und der Mess-Lichtstrahl einem Teil des von der Lichtquelle ausgegebenen Lichtstrahls entspricht, der von der reflektierenden Fläche reflektiert wird und der einen optischen Weg im Fabry-Pérot-Hohlraum durchquert, dessen Schwankung von der zu bestimmenden Schwankung der Höhe des Flüssigkeitsniveaus in dem Becher abhängt,

   wobei die Lichtquelle den zwei optischen Messvorrichtungen gemeinsam ist, wobei der Neigungsmesser einen 1*2-Wege-Koppler umfasst, um den von der gemeinsamen Lichtquelle ausgegebenen Lichtstrahl in zwei Strahlen zu teilen.

3. Messsystem, umfassend einen Neigungsmesser (20) nach einem der Ansprüche 1 oder 2 und Bestimmungsmittel der Neigungsschwankung der Struktur auf der Basis von Werten, die von den optischen Messvorrichtungen (30a, 30b) ermittelt werden.

4. Verwendung des Messsystems nach Anspruch 3 für das Messen von geophysischen Verformungen.


**Claims**

1. A tiltmeter (20) for measuring a tilt variation of a structure from a given starting position, including:

   - two pots (21a, 21b), each pot containing an identical volume and an identical height of an identical liquid (23),
   - communication means (22) connecting said two pots and allowing the liquid to flow between the two pots in accordance with the principle of communicating vessels,
   - two optical measuring devices (30a, 30b), based on optical fibers, one optical measuring device per pot, each optical measuring device measuring a variation Δz in height of the level of liquid (23) in the associated pot,

   **characterized in that** the optical measuring devices (30a, 30b) are coupled to a common light source.

**2.** The tiltmeter (20) as claimed in claim 1 wherein the devices based on optical fibers (30a, 30b) are extrinsic fiber optic devices, each optical measuring device (30a, 30b) comprising:

- a light source, of central wavelength $\lambda_0$, for generating a light beam toward the associated pot,
- a reflecting surface (31a, 31b) positioned inside the pot,
- an optical fiber, called the measuring fiber (32a, 32b), for transporting and guiding the light beam toward the associated pot, one end (301a, 301b) of said measuring fiber, fixed at the level of a high end (212a, 212b) of the pot (21a, 21b) and disposed facing the reflecting surface (31a, 31b), forming with said reflecting surface an external Fabry-Pérot optical cavity,
- means for detecting an interferometric signal, said interferometric signal containing information on the movement of the liquid level relative to the end of the measuring fiber, and being generated by interference between a reference light beam and a measurement light beam, said reference light beam corresponding to a fraction of the light beam from the light source that is reflected by the end of the fiber and said measurement light beam corresponding to a fraction of the light beam from the light source that is reflected by the reflecting surface and that follows an optical path in the Fabry-Pérot cavity the variation of which is a function of the liquid level height variation in the pot to be determined,

the light source being common to the two optical measuring devices, the tiltmeter includes a 1*2 channel coupler for splitting the beam from the common light source into two beams.

**3.** A measuring system including a tiltmeter (20) as claimed in either one of claims 1 or 2 and means for determining the tilt variation of the structure on the basis of the values measured by the optical measuring devices (30a, 30b).

**4.** Use of the measuring system as claimed in claim 3 for measuring geophysical deformations.

**Fig.1**

**Fig.2**

**Fig.3**

Amplitude spectrale en µrad

Fréquence (Hz)

**Fig.4**

Inclinaison en µrad

Avril    Mai    Juin    Juillet    Août    Septembre

**Fig.5**

Fig.6b

Fig.6a

Fig.6c

Fig.7a

36 heures

Fig.7b

EP 2 926 085 B1

Inclinaison (µrad)

Fig.8a

Inclinaison (µrad)

Fig.8b

dérive (x10⁻³ µrad)

Fig.9a

dérive (µrad)

Fig.9b

Pression atmosphérique (hPa)

Fig.10a

Pression atmosphérique (hPa)

Fig.10b

19

**Fig.11a**

**Fig.11b**

## RÉFÉRENCES CITÉES DANS LA DESCRIPTION

**Documents brevets cités dans la description**

- FR 1056230

**Littérature non-brevet citée dans la description**

- **J. CHERRY et al.** High resolution tiltmeters and seismometers based on Extrinsic Fiber Fabbry-Perot Interferometry (EFFPI). *The LINES Project*
- **KOSTOGLODOV et al.** Long-baseline fluid tiltmeter for seismotectonic studies of Mexican subduction zone. *Geofisica Int.,* 2002, vol. 41 (1), 11-25
- **BOUDIN et al.** A silica long base tiltmeter with high stability and resolution. *Rev. Sci. Instrum.,* 2008, vol. 79, 034502
- **D'OREYE, N. ; ŻURN, W.** Very high resolution long-baseline watertube tiltmeter to record small signais from Earth free oscillations up to secular tilts. *Rev. Sci. Instrum.,* 2005, vol. 76, 024501
- **BOUDIN et al.** A silica long base tiltmeter with high stability and resolution. *Review of Scientific Instruments,* 2008, vol. 79 (3), 034502-1, 034502-11